# EUROPEAN PATENT APPLICATION

(11) **EP 1 871 033 A2**
(43) Date of publication of application: **26.12.2007**
(21) Application number: 07012197.5
(22) Date of filing: 21.06.2007
(51) Int. Cl.: H04L 1/18

(54) **Method and apparatus for detection of local NACK in a wireless communications system**

(30) Priority: 22.06.2006 US 805472 P
(71) Applicant: Innovative Sonic Limited, Road Town Tortola (VG)
(72) Inventor: Jiang, Sam Shiaw-Shiang, Peitou, Tapei City (TW)
(74) Representative: Schaeberle, Steffen

(57) **Abstract**

A method for detecting local NACK in a wireless communications system comprises an HARQ transmitter generating a local NACK signal when the HARQ transmitter gives up HARQ transmission due to expiration of a timer (302).

## Description

This application claims the benefit of U.S. Provisional Application No. 60/805,472, filed on JUN 22, 2006 and entitled "Method and Apparatus for Detecting Local NACK in a Wireless Communications System," the contents of which are incorporated herein by reference.

The present invention relates to a method and apparatus for detection of local NACK in a wireless communications system according to the pre-characterizing clauses of claims 1 and 5.

The third generation mobile telecommunications system (called 3G system) provides high frequency spectrum utilization, universal coverage, and high quality, high-speed multimedia data transmission, and also meets all kinds of QoS requirements simultaneously, providing diverse, flexible, two-way transmission services and better communication quality to reduce transmission interruption rates. However, due to demand for high-speed and multimedia applications, the next generation mobile telecommunications technology and related communication protocols have been developed.

Long Term Evolution wireless communications system (LTE system), an advanced high-speed wireless communications system established upon the 3G mobile telecommunications system, supports only packet-switched transmission, and tends to combine Radio Link Control (RLC) layer and Medium Access Control (MAC) layer into the same communication layer, so that the system structure becomes simple.

In the 3G system, MAC entity provides a function of Hybrid Automatic Retransmission Request (HARQ), which is a technology combining Feed-forward Error Correction (FEC) and ARQ methods. In addition, RLC entity can apply specified mechanisms, such as sequence number checking, to provide an ARQ function, which has low retransmission efficiency due to complex operations, and is also called outer-ARQ.

In the prior art, both outer-ARQ and HARQ will be used for LTE system. To decrease complexity of outer-ARQ to enhance retransmission efficiency, a method, named "HARQ assisted ARQ operation," is disclosed in a 3GPP document R2-060374, which can be received from http://www.3gpp.org/ftp/tsg_ran/WG2_RL2/TSGR2_51/Documents/.

According to R2-060374, an HARQ transmitter provides local acknowledgement and local negative acknowledgement signals, local ACK/local NACK, to an ARQ transmitter upon different events. Local NACK is generated by the HARQ transmitter upon the following two events:
1. When the HARQ transmitter gives up the HARQ transmission due to the maximum retransmission limit.
2. When a NACK-to-ACK error is reported to the HARQ transmitter. In addition, local ACK is generated when none of above two events for an ARQ packet have taken place during a predefined time interval.

Using the method disclosed in R2-060374, the ARQ operation becomes simple, lost packets are detected more quickly, and the amount of feedback signaling is smaller. However, the method may cause delay of retransmission, and thus decrease transmission efficiency.

Firstly, duration of discard timer for an RLC SDU, called RLC discard timer hereinafter, matches with the QoS requirement, while duration of discard timer used in HARQ, called HARQ discard timer hereinafter, is limited by HARQ procedure itself instead of by the QoS requirement. The reason is that, in the receiving side, the HARQ discard timer is used for a re-ordering queue to solve problems due to NACK-to-ACK error or DTX-to-ACK error, which might occur in an HARQ process. When the RLC entity of the receiver detects one of the transmission errors, the receiver sends a negative acknowledged status report to request for a retransmission. If the transmitter receives this request before the RLC discard timer expires, the RLC entity of the transmitter will re-submit the corresponding packet to the HARQ entity for transmission. Thus, duration of the HARQ discard timer must be set to be shorter than what is specified by QoS requirement in general. Otherwise, if duration of the HARQ discard time is set to be equal to or longer than the QoS requirement, the missing packets due to NACK-to-ACK error or DTX-to-ACK error will have no chance to get retransmitted by the RLC entity of the transmitter. In other words, when duration of the HARQ discard time is set to be equal to or longer than what is specified by the QoS requirement, the RLC discard timer will expire on or before the time when the HARQ discard timer expires before the HARQ process receives an ACK (ACK in HARQ procedure) corresponding to a packet, so that the packet will be discarded and an explicit data discard procedure may be invoked.

Therefore, it is possible that the HARQ transmitter gives up the HARQ transmission due to the HARQ discard timer expiration before the RLC discard timer expires. When this happens, according to the method disclosed in R2-060374, local NACK is not generated, so that the retransmission of the packet will be delayed until an RLC status report is sent from the peer receiver. Data latency is increased unnecessarily.

This in mind, the present invention aims at providing a method and apparatus for detection of local NACK in a wireless communications system that timely triggers packet retransmission, so as to decrease data latency.

This is achieved by a method and apparatus for detection of local NACK in a wireless communications system according to claims 1 and 5. The dependent claims pertain to corresponding further developments and improvements.

As will be seen more clearly from the detailed description following below, the claimed method for detecting local NACK in a wireless communications system comprises an HARQ transmitter generating a local NACK signal when the HARQ transmitter gives up HARQ transmission due to expiration of a timer.

In the following, the invention is further illustrated by way of example, taking reference to the accompanying drawings. Thereof
Fig. 1 is a functional block diagram of a communications device.
Fig. 2 is a diagram of the program code shown in Fig. 1.
Fig. 3 is a flowchart diagram of a process according to an embodiment of the present invention.

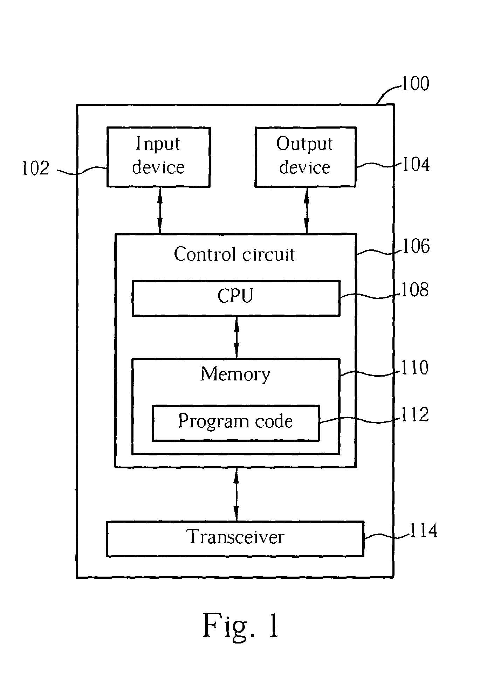

Please refer to Fig. 1, which is a functional block diagram of a communications device 100. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 is utilized in a third generation (3G) mobile communications system.

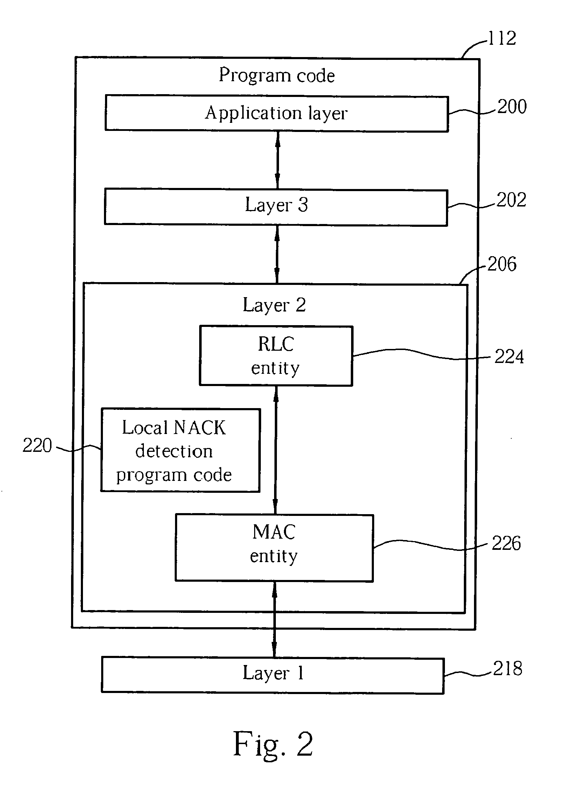

Please continue to refer to Fig. 2. Fig. 2 is a diagram of the program code 112 shown in Fig. 1. The program code 112 includes an application layer 200, a Layer 3 202, and a Layer 2 206, and is coupled to a Layer 1 218. The Layer 2 206 comprises two sub-layers: a radio link control (RLC) entity 224 and a media access control (MAC) entity 226. A primary function of the RLC entity 224 is providing segmentation, reassembly, concatenation, padding, retransmission, sequence check, and duplication detection on transmitted data or control instructions based on different transmission quality requirements. The MAC entity 226 can match packets received from different logic channels of the RLC entity 224 to common, shared, or dedicated transport channels according to radio resource allocation commands of the Layer 3 (RRC layer) 202, for performing channel mapping, multiplexing, transport format selection, or random access control.

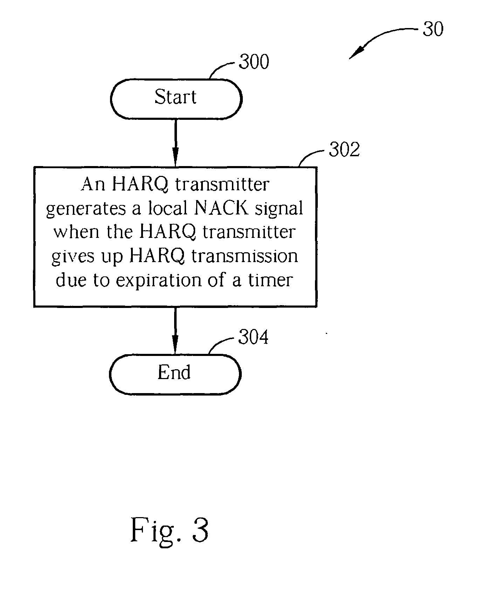

An advanced wireless communications system, such as LTE, supports only packet-switched transmission, so that the RLC entity 224 and the MAC entity 226 are located in the same spot, such as a base station so that they can be combined into one communication entity for simplicity. Note that whether RLC entity 224 and MAC entity 226 are combined into one communication entity is only a modeling issue and is not relevant to the present invention. The present invention provides a local NACK detection program code 220 for detecting local NACK to timely trigger retransmission and decrease data latency accordingly. Please refer to Fig. 3, which illustrates a schematic diagram of a process 30 according to an embodiment of the present invention. The process 30 is utilized for detecting local NACK in a wireless communications system, and can be complied into the local NACK detection program code 220. The process 30 comprises the following steps:
Step 300: Start.
Step 302: An HARQ transmitter generates a local NACK signal when the HARQ transmitter gives up HARQ transmission due to expiration of a timer.
Step 304: End.

According to the process 30, the HARQ transmitter generates the local NACK signal when the HARQ transmitter gives up the HARQ transmission due to expiration of a timer. Preferably, the timer is the aforementioned HARQ discard timer. Therefore, through the process 30, when the HARQ discard timer expires, the HARQ transmitter can generate the local NACK signal to the ARQ transmitter, i.e. the RLC entity, to timely trigger retransmission, and decrease data latency. In addition, like R2-060374, the embodiment of the present invention can further generate the local NACK signal for the ARQ transmitter when the HARQ transmitter gives up the HARQ transmission due to a maximum retransmission limit, or when a NACK-to-ACK error is reported to the HARQ transmitter. Oppositely, local ACK is generated by the HARQ transmitter when none of above three events for an ARQ packet have taken place during a predefined time interval.

Therefore, using the process 30, when the HARQ discard timer expires, the HARQ transmitter can generate the local NACK signal for the ARQ transmitter, to timely trigger retransmission, and decrease data latency. As a result, the embodiment of the present invention can timely trigger retransmission without any RLC status report sent from the peer receiver, so as to enhance transmission efficiency.

## Claims

1. A method for detecting local NACK in a wireless communications system comprising :
performing a Hybrid Automatic Retransmission Request, called HARQ hereinafter;
performing an Automatic Retransmission Request operation, which retransmits a packet when a local NACK is generated; and
**characterized in that** an HARQ transmitter generates the local NACK signal when the HARQ transmitter gives up HARQ transmission due to expiration of a timer (302).

2. The method of claim 1, **characterized in that** the timer is used for triggering discard of a packet in the HARQ transmitter.

3. The method of claim 1 further comprising the HARQ transmitter generating the local NACK signal when the HARQ transmitter gives up the HARQ transmission due to a maximum retransmission limit, or when a NACK-to-ACK error is reported to the HARQ transmitter.

4. The method of claim 3 further comprising the HARQ transmitter generating a local ACK signal when none of events for generating the local NACK signal for a packet have taken place during a predefined time interval.

5. A communications device (100) of a wireless communications system utilized for accurately detecting local NACK comprising:
a control circuit (106) for realizing functions of the communications device (100);
a central processing unit (108) installed in the control circuit (106) for executing a program code (112) to operate the control circuit (106); and
a memory (110) coupled to the central processing unit (108) for storing the program code (112);
wherein the program code (112) comprises:
performing a Hybrid Automatic Retransmission Request, called HARQ hereinafter;
performing an Automatic Retransmission Request operation, which retransmits a packet when a local NACK is generated; and
**characterized in that** the program code (112) further comprises an HARQ transmitter generating a local NACK signal when the HARQ transmitter gives up HARQ transmission due to expiration of a timer (302).

6. The communications device of claim 5, **characterized in that** the timer is used for triggering discard of a packet in the HARQ transmitter.

7. The communications device of claim 5, **characterized in that** the program code (112) further comprises the HARQ transmitter generating the local NACK signal when the HARQ transmitter gives up the HARQ transmission due to a maximum retransmission limit, or when a NACK-to-ACK error is reported to the HARQ transmitter.

8. The communications device of claim 7, **characterized in that** the program code (112) further comprises the HARQ transmitter generating a local ACK signal when none of events for generating the local NACK signal for a packet have taken place during a predefined time interval.
